# EUROPEAN PATENT SPECIFICATION

(11) **EP 1 742 021 B1**
(45) Date of publication and mention of the grant of the patent: **09.09.2015**
(21) Application number: 05380150.2
(22) Date of filing: 06.07.2005
(51) Int. Cl.: G01D 5/244

(54) **A readhead for an optical measuring device.**
Ein Lesekopf für ein optisches Messgerät.
Une tête de lecture pour un dispositif de mesure optique.

(43) Date of publication of application: 10.01.2007
(73) Proprietor: FAGOR, S.COOP., 20500 Mondragon (Gipuzkoa) (ES)
(72) Inventor: Urra Chandia, Juan Carlos, 20500 Mondragon (Gipuzkoa) (ES); Moron Pascual, Severino, 20500 Mondragon (Gipuzkoa) (ES)
(74) Representative: Igartua, Ismael

(56) References cited:
- EP-A- 1 302 753
- US-A- 5 128 609
- US-A- 5 241 173

## Description

### TECHNICAL FIELD

This invention relates to readheads for optical measuring devices, these devices comprising a graduated scale, and the readhead comprising means to determine if said readhead is correctly installed or not with respect to the graduated scale.

### PRIOR ART

Readheads fixed to a moving support are well known, said moving support being displaced along with respect to a static support to which a graduated scale is fixed. Control means detect said displacement, and determine the position of said moving support with respect to said static support based on said displacement.

When the moving support is displaced with respect to the static support, sensing means disposed in the readhead detect marks disposed on the graduated scale, in such a way that said sensing means generates two signals in quadrature. The signals in quadrature are received by control means, and said control means count the edges of said signals in quadrature, thus the position of said moving support with respect to said static support is determined based on said counting.

To get a correct counting, the signals in quadrature need to have acceptable levels, thus a correct installation of the readhead with respect to the graduated scale is necessary. US5883298A discloses a readhead that comprises means to determine if the installation of the readhead with respect to the graduated scale is correct or not, based on if the edges of the signals in quadrature are within a predetermined range or not.

US5241173A discloses a readhead that comprises an alarm signal to indicate if the signals in quadrature are acceptable or not while the device operates normally. Besides, said readhead comprises means to determine if the levels of the signals in quadrature are within a predetermined range during the installation of said readhead, and it is indicated by a led. Depending on the colour of the led, the user determines if said readhead is correctly installed or not.

EP1302753A discloses a system where a readhead is automatically and optimally adjusted depending on an adjustment signal.

US5128609A describes a device to assist in setting up the pith, roll, yaw and standoff of a readhead relative to a scale, so as to improve the quadrature relationship of its outputs. Two superimposed Lissajous figures are produced on an oscilloscope screen, one of these figures being a rotation or reflection of the other.

EP1126248A2 discloses a readhead for an optical device, comprising a digital indicating signal which represents the deviation of quadrature signal amplitudes to an optimal level.

DD130685 describes an indicating signal which represents the deviation of quadrature signal amplitudes in respect of theoretical levels.

### DISCLOSURE OF THE INVENTION

The object of the invention is to provide a readhead for an optical measuring device, the optical device comprising a graduated scale, and the readhead comprising means to determine if the readhead has been installed correctly with respect to the graduated scale.

The optical device also comprises control means that measure the position of the readhead with respect to the graduated scale, said graduated scale generating at least two signals in quadrature that are acceptable when they have levels comprised within determined levels. The readhead also generates a plurality of output control signals to be received and used by control means, during the measuring of the position of said readhead with respect to the graduated scale.

One of the output control signals is an adjustment signal. When the signals in quadrature are acceptable and said adjustment signal corresponds with a logic one, the adjustment signal is analogue and the deviation of the levels of said signals in quadrature with respect to optimal levels can be determined with said adjustment signal.

Therefore, an output control signal that performs a specific function to measure the position of the readhead with respect to the graduated scale can also be used to determine the deviation of the levels of the signals in quadrature with respect to the optimal levels when said signals in quadrature are acceptable, thus enabling the installation of said readhead with respect to the said graduated scale to be adjusted until an optimal installation is obtained.

These and other advantages and characteristics of the invention will be made evident by the drawings and the detailed disclosure of the invention.

### DESCRIPTION OF THE DRAWINGS

FIG. 1 shows a schematic view of an embodiment of the optical measuring device of the invention.
FIG. 2 is a graphic which shows the resulting lissajous of the signals in quadrature, in an embodiment of the invention.
FIG. 3 shows the relation between the alarm signal and the deviation of the levels of the signals in quadrature with respect to the optimal level, in an embodiment of the invention.

### DETAILED DISCLOSURE OF THE INVENTION

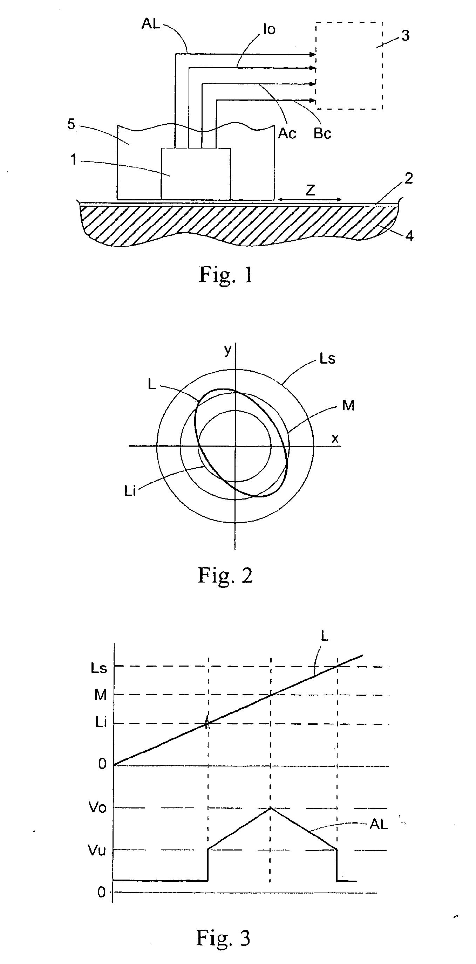

Figure 1 shows an embodiment of the readhead 1 of the present invention. The readhead 1 of the invention is used for optical measuring devices that comprise a graduated scale 2 fixed to a static support 4, and control means 3. Said readhead 1 is fixed to a moving support 5, and said moving support 5 can be displaced with respect to the static support 4 in a direction Z. Control means 3 detect said displacement, so that the position of said readhead 1 with respect to the graduated scale 2 is measured based on said displacement.

The readhead 1 comprises sensing means (not represented in the drawings) to generate two signals in quadrature. Sensing means detect marks (not represented in the drawings) disposed on the graduated scale 2 when the moving support 5 is displaced with respect to the static support 4, and said signals in quadrature are generated based on said detection. To make possible the measurement of the displacement of said readhead 1 with respect to said graduated scale 2 by control means 3, said signals in quadrature have to be acceptable, being acceptable when they have levels comprised within determined limits. Thus, the amplitude and the offset of the signals in quadrature and the phase shift between said signals in quadrature have to be within the determined limits, so correct installation of the readhead 1 with respect to the graduated scale 2 is needed.

The signals in quadrature are internal, and the readhead 1 generates a plurality of output control signals to be received and used by control means 3 during the position measurement of said readhead 1 with respect to the graduated scale 2. The output control signals comprise counting signals in quadrature Ac and Bc, and a counting reference signal Io. The counting signals in quadrature Ac and Bc are obtained from the signals in quadrature, and control means 3 count the edges of said counting signals in quadrature Ac and Bc, determining the position of the readhead 1 with respect to the graduated scale 2 based on said counting, taking as a reference the counting reference signal Io.

One of the output control signals is used also as an adjustment signal, the deviation of the levels of the signals in quadrature with respect to optimal levels being determined with said adjustment signal when said signals in quadrature are acceptable, and the optical levels being obtained from the amplitude and the offset of the signals in quadrature, as well as from the phase shift between said signals in quadrature. Thus it is possible to determine the quality of the installation readhead 1 with respect to the graduated scale 2.

When the deviation of the levels of signals in quadrature with respect to the optimal levels is determined with the adjustment signal, said adjustment signal is analogue and corresponds with a logic one, depending the value of said adjustment signal on the value of said deviation. Said value is defined between an optimal value Vo and a threshold value Vu, the optimal value Vo corresponding with the optimal levels of the signals in quadrature, and the threshold value Vu corresponding with the determined limits of the levels of said signals in quadrature. Said threshold value Vu is the minimum possible value corresponding to the logic one of said adjustment signal, and said optimal value Vo is the maximum possible value corresponding to said logic one. Therefore, for a 5 volt power supply, the optimal value Vo could be, for example, approximately 5 volts, and the threshold value Vu approximately 2.5 volts.

As the level of the signals in quadrature moves away from the optimal levels, the value of the adjustment signal moves away from the optimal value Vo, being linear the relation between the deviation of the levels of the said signals in quadrature with respect to the said optimal levels and said adjustment signal. Therefore, the nearer the adjustment signal value to the optimal value Vo is, the better the installation of the readhead 1 with respect to the graduated scale 2 is. If the value of said output control signal is equal to or close to the threshold value Vu, there is a risk for the signals in quadrature to convert into non acceptable signals when faced with for example, dirt on said graduated scale 2, so thanks to said output control signal, the user can readjust the installation of said readhead 1 with respect to said graduated scale 2, until values of said output control signal close to said optimal value Vo are obtained.

It is known that if the signals in quadrature are fed into the X and Y channels of an oscilloscope a figure known as Lissajous L is obtained, said Lissajous L depending on the levels of said signals in quadrature. In order to determine if said levels are within the determined limits, in one preferred embodiment an upper limit Ls and an lower limit Li for the Lissajous L resulting from said signals in quadrature are established, obtaining an optimal level M for said Lissajous L from the average value between said upper limit Ls and said lower limit Li, as shown in figure 2. Therefore, when the signals in quadrature are acceptable and the adjustment signal corresponds with a logic one, the deviation of the Lissajous L with respect to the optimal level M is determined with said adjustment signal, so that with a Lissajous L equal to said optimal level M said adjustment signal has an optimal value Vo, having the threshold value Vu with a Lissajous L equal to the upper limit Ls or equal to the lower limit Li.

In a first embodiment of the invention, the output control signals comprise an alarm signal AL, the alarm signal AL determining if the signals in quadrature are acceptable or not. When said signals in quadrature are acceptable, said alarm signal AL corresponds with a logic one, and when said signals in quadrature are not acceptable said alarm signal AL corresponds with a logic zero. Control means 3 read said alarm signal AL, in such a way that if they detect that the signals in quadrature are not acceptable, said control means 3 generate an alarm. In said first embodiment, the adjustment signal is the alarm signal AL, therefore in addition to determining if the signals in quadrature are acceptable or not, the deviation of the levels of said signals in quadrature with respect to the optimal levels can also be determined with said alarm signal AL, when said signals in quadrature are acceptable, as shown in figure 3.

In a second embodiment, the adjustment signal is the reference counting signal Io, and in a third embodiment, said adjustment signal is one of the counting signals in quadrature Ac, Bc.

## Claims

1. A readhead for an optical measuring device, the device comprising a graduated scale (2) and control means (3) that measure the position of the readhead (1) with respect to said graduated scale (2), said readhead (1) is arranged to generate at least two signals in quadrature when it is displaced with respect to the graduated scale (2), said signals in quadrature being acceptable when they have levels comprised within determined limits, the readhead (1) being also arranged to generate a plurality of output control signals to be received and used by control means (3) during the measurement of the position of said readhead (1) with respect to the graduated scale (2), the output control signals comprising counting signals in quadrature (Ac, Bc) that are obtained from the signals in quadrature, a counting reference signal (Io) and an alarm signal (AL) that indicates if the signals in quadrature are acceptable or not, said alarm signal (AL) corresponding with a logic one when said signals in quadrature are acceptable, **characterised in that** one of said digital output control signals is also used to determine the deviation of the levels of the signals in quadrature with respect to optimal levels when said signals in quadrature are acceptable, said output signal being considered also as an adjustment signal and being processed as an analogue signal when used to determine said deviation, the analogue value of said adjustment signal being representative of said deviation, the output signal being used as the adjustment signal when it comprises a logic one level, said analogue value being defined between an optimal value (Vo) and a threshold value (Vu) when processed as an analogue signal, the optimal value (Vo) being representative of the optimal levels of the signals in quadrature, and the threshold value (Vu) being representative of the determined limits of the levels of said signals in quadrature, the threshold value (Vu) being the minimum possible value of the logic one level and the optimal value (Vo) being the maximum possible value of the logic one level.

2. A readhead according to the preceding claim, wherein the threshold value (Vu) is the minimum possible analogue value of the logic one level, and the optimal value (Vo) is the maximum possible analogue value of said logic one level.

3. A readhead according to any of the preceding claims, wherein, when the output signal which acts also as an adjustment signal comprises a logic one and the signals in quadrature are acceptable, the relation between the deviation of the levels of said signals in quadrature with respect to the optimal levels and the analogue value of said adjustment signal is linear.

4. A readhead according to any of the preceding claims, wherein the output signal acting also as an adjustment signal is the alarm signal (AL).

5. A readhead according to any of claims from 1 to 3, wherein the output control signal acting also as an adjustment signal is one of the counting signals (Ac, Bc, Io).

6. A readhead according to claim 5, wherein the output control signal acting also as an adjustment signal is the reference counting signal (Io).

7. A readhead according to claim 5, wherein the output control signal acting also as an adjustment signal is one of the counting signals in quadrature (Ac,Bc).

## Patentansprüche

1. Lesekopf für ein optisches Messgerät, wobei das Gerät eine abgestufte Skala (2) und Steuerungsmittel (3) umfasst, die die Position des Lesekopfs (1) in Bezug auf die abgestufte Skala (2) messen, wobei der Lesekopf (1) dafür angeordnet ist, mindestens zwei Signale in Quadratur zu erzeugen, wenn er in Bezug auf die abgestufte Skala (2) verlagert wird, wobei die Signale in Quadratur zulässig sind, wenn sie Pegel aufweisen, die innerhalb festgelegter Grenzen liegen, wobei der Lesekopf (1) außerdem dafür angeordnet ist, mehrere Ausgangssteuerungssignale zu erzeugen, die von Steuerungsmitteln (3) während der Messung der Position des Lesekopfs (1) in Bezug auf die abgestufte Skala (2) empfangen und verwendet werden sollen, wobei die Ausgangssteuerungssignale Zählsignale in Quadratur (Ac, Bc), die aus den Signalen in Quadratur gewonnen werden, ein Zählreferenzsignal (Io) und ein Alarmsignal (AL), das anzeigt, ob die Signale in Quadratur zulässig sind oder nicht, umfassen, wobei das Alarmsignal (AL) einer logischen Eins entspricht, wenn die Signale in Quadratur zulässig sind, **dadurch gekennzeichnet, dass** eines der digitalen Ausgangssteuerungssignale auch verwendet wird, um die Abweichung der Pegel der Signale in Quadratur in Bezug auf optimale Pegel zu bestimmen, wenn die Signale in Quadratur zulässig sind, wobei das Ausgangssignal auch als Justierungssignal gilt und als analoges Signal verarbeitet wird, wenn es zum Bestimmen der Abweichung verwendet wird, wobei der analoge Wert des Justierungssignals die Abweichung darstellt, wobei das Ausgangssignal als Justierungssignal verwendet wird, wenn es einen Pegel einer logischen Eins umfasst, wobei der analoge Wert zwischen einem optimalen Wert (Vo) und einem Schwellenwert (Vu) definiert wird, wenn er als analoges Signal verarbeitet wird, wobei der optimale Wert (Vo) die optimalen Pegel der Signale in Quadratur darstellt und der Schwellenwert (Vu) die bestimmten Grenzen der Pegel der Signale in Quadratur darstellt, wobei der Schwellenwert (Vu) der kleinstmögliche Wert des Pegels der logischen Eins ist und der optimale Wert (Vo) der größtmögliche Wert des Pegels der logischen Eins ist.

2. Lesekopf nach dem vorhergehenden Anspruch, wobei der Schwellenwert (Vu) der kleinstmögliche analoge Wert des Pegels der logischen Eins ist und der optimale Wert (Vo) der größtmögliche analoge Wert des Pegels der logischen Eins ist.

3. Lesekopf nach einem der vorhergehenden Ansprüche, wobei, wenn das auch als Justierungssignal dienende Ausgangssignal eine logische Eins umfasst und die Signale in Quadratur zulässig sind, die Beziehung zwischen der Abweichung der Pegel der Signale in Quadratur in Bezug auf die optimalen Pegel und dem analogen Wert des Justierungssignals linear ist.

4. Lesekopf nach einem der vorhergehenden Ansprüche, wobei das auch als Justierungssignal dienende Ausgangssignal das Alarmsignal (AL) ist.

5. Lesekopf nach einem der Ansprüche 1 bis 3, wobei das auch als Justierungssignal dienende Ausgangssteuerungssignal eines der Zählsignale (Ac, Bc, Io) ist.

6. Lesekopf nach Anspruch 5, wobei das auch als Justierungssignal dienende Ausgangssteuerungssignal das Referenzzählsignal (Io) ist.

7. Lesekopf nach Anspruch 5, wobei das auch als Justierungssignal dienende Ausgangssteuerungssignal eines der Zählsignale in Quadratur (Ac, Bc) ist.

## Revendications

1. Tête de lecture pour un dispositif de mesure optique, le dispositif comprenant une échelle graduée (2) et des moyens de commande (3) qui mesurent la position de la tête de lecture (1) par rapport à ladite échelle graduée (2), ladite tête de lecture (1) est agencée pour générer au moins deux signaux en quadrature lorsqu'elle est déplacée par rapport à l'échelle graduée (2), lesdits signaux en quadrature étant acceptables lorsqu'ils ont des niveaux compris dans des limites déterminées, la tête de lecture (1) étant également agencée pour générer une pluralité de signaux de commande de sortie à recevoir et utiliser par les moyens de commande (3) pendant la mesure de la position de ladite tête de lecture (1) par rapport à l'échelle graduée (2), les signaux de commande de sortie comprenant des signaux de comptage en quadrature (Ac, Bc) qui sont obtenus à partir des signaux en quadrature, un signal de référence de comptage (Io) et un signal d'alarme (AL) qui indique si les signaux en quadrature sont acceptables ou non, ledit signal d'alarme (AL) correspondant à un 1 logique lorsque lesdits signaux en quadrature sont acceptables, **caractérisée en ce que** l'un desdits signaux de commande de sortie numériques est également utilisé pour déterminer l'écart des niveaux des signaux en quadrature par rapport à des niveaux optimaux lorsque lesdits signaux en quadrature sont acceptables, ledit signal de sortie étant considéré également en tant que signal d'ajustement et étant traité en tant que signal analogique lorsqu'il est utilisé pour déterminer ledit écart, la valeur analogique dudit signal d'ajustement étant représentative dudit écart, le signal de sortie étant utilisé en tant que signal d'ajustement lorsqu'il comprend un niveau logique 1, ladite valeur analogique étant définie entre une valeur optimale (Vo) et une valeur de seuil (Vu) lorsqu'il est traité en tant que signal analogique, la valeur optimale (Vo) étant représentative des niveaux optimaux des signaux en quadrature, et la valeur de seuil (Vu) étant représentative des limites déterminées des niveaux desdits signaux en quadrature, la valeur de seuil (Vu) étant la valeur minimum possible du niveau logique 1 et la valeur optimale (Vo) étant la valeur maximum possible du niveau logique 1.

2. Tête de lecture selon la revendication précédente, dans laquelle la valeur de seuil (Vu) est la valeur analogique minimum possible du niveau logique 1, et la valeur optimale (Vo) est la valeur analogique maximum possible dudit niveau logique 1.

3. Tête de lecture selon l'une quelconque des revendications précédentes, dans laquelle, lorsque le signal de sortie qui agit également en tant que signal d'ajustement comprend un 1 logique et que les signaux en quadrature sont acceptables, la relation entre l'écart des niveaux desdits signaux en quadrature par rapport aux niveaux optimaux et la valeur analogique dudit signal d'ajustement est linéaire.

4. Tête de lecture selon l'une quelconque des revendications précédentes, dans laquelle le signal de sortie agissant également en tant que signal d'ajustement est le signal d'alarme (AL).

5. Tête de lecture selon l'une quelconque des revendications 1 à 3, dans laquelle le signal de commande de sortie agissant également en tant que signal d'ajustement est l'un des signaux de comptage (Ac, Bc, Io).

6. Tête de lecture selon la revendication 5, dans laquelle le signal de commande de sortie agissant également en tant que signal d'ajustement est le signal de comptage de référence (Io).

7. Tête de lecture selon la revendication 5, dans laquelle le signal de commande de sortie agissant également en tant que signal d'ajustement est l'un des signaux de comptage en quadrature (Ac, Bc).
